# EUROPEAN PATENT APPLICATION

(11) **EP 1 657 827 A1**
(43) Date of publication of application: **17.05.2006**
(21) Application number: 04772185.7
(22) Date of filing: 19.08.2004
(51) Int. Cl.: H04B 3/58, H01F 17/06, H05K 9/00

(54) **RELAY AMPLIFIER**

(30) Priority: 20.08.2003 JP 2003208066
(71) Applicant: MITSUBISHI MATERIALS CORPORATION, Chiyoda-ku, Tokyo 100-8117 (JP); MITSUBISHI DENKI KABUSHIKI KAISHA, Chiyoda-ku Tokyo 100-8310 (JP)
(72) Inventor: NAKAMURA, Kenzo, Mitsubishi Materials Corp., Tokyo 112-0002 (JP); YAMASHITA, Nobuyuki, Mitsubishi Materials Corp., Tokyo 112-0002 (JP); NAKAMURA, Masahiko, Mitsubishi Materials Corp., Chichibu-gun, Saitama 368-8502 (JP); OKAMOTO, Takafumi, Mitsubishi Materials Corp., Tokyo 112-0002 (JP); OJIMA, Sawako, c/o Mitsubishi Denki K.K., Tokyo 100-8310 (JP); HORI, Yasuaki, c/o Mitsubishi Denki K.K., Tokyo 100-8310 (JP); NARIKAWA, Masafumi, c/o Mitsubishi Denki K.K., Tokyo 100-8310 (JP); ISHIKAWA, Naoki, c/o Mitsubishi Denki K.K., Tokyo 100-8310 (JP)
(74) Representative: Hoffmann, Klaus
(86) International application number: PCT/JP2004/012229
(87) International publication number: WO 2005/020459

(57) **Abstract**

A relay amplifier provided at a branching point of an electric power line in an electric power line communication for amplifying communication signals, comprising a plurality of signal couplers provided at the respective electric power lines on both sides of the branching point for transmitting/receiving the communication signals to/from the electric power lines; and an amplifier for amplifying the communication signals inputted from the plurality of signal couplers.

## Description

### TECHNICAL FIELD

The present invention relates to a relay amplifier used for a remote communications system employing a cable.

The present application claims priority on Japanese Patent Application No. 2003-208066 filed on August 20, 2003, the content of which is incorporated herein by reference.

### BACKGROUND ART

Where a line length through which signals are transmitted is long in a power line communication, a problem arises in that the power level in a communication signal is greatly attenuated due to mismatching of impedance in a power line and branch points, and the communications quality is lowered. Therefore, it is conceived that, by providing an amplification circuit in a relay and amplifying signal power, communication signals can be prevented from deteriorating so as not to lower the communications quality.

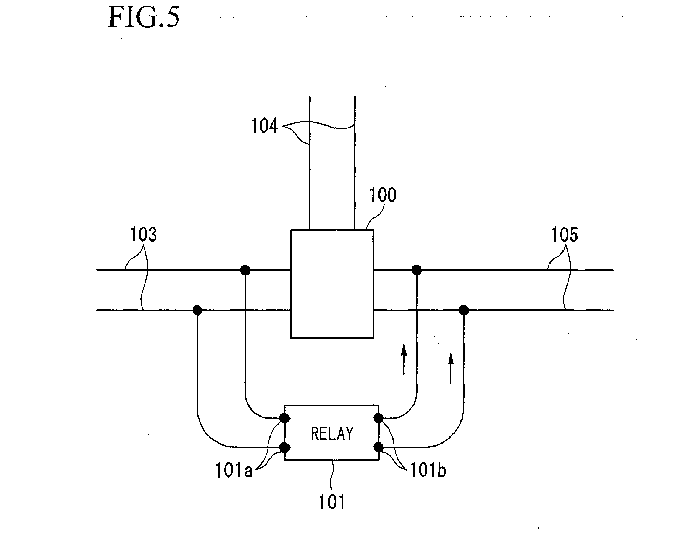

For example, as depicted in FIG. 5, where amplification is carried out by an amplifier (not illustrated) in a relay 101 in a power branch point 100 of power lines 103, 104 and 105, communication signals amplified by the amplifier are outputted from an output terminal 101b, and inputted, with a delay generated, into an input terminal 101a via the power branch point 100 (this is called "loop-back").

In the relay 101, there is a problem in that the amplifier is caused to oscillate by the above-described loop-back, resulting from the communication signal being delayed, and the communications quality deteriorates. In addition, the communication signal subjected to the loop back becomes noise, and the S/N ratio is worsened, wherein another problem occurs in that the communications quality is lowered.

Accordingly, a frequency converter unit is provided in a relay to convert the frequency of carrier waves of inputted communication signals, and carrier waves of frequencies differing from that when inputted are outputted after amplification, whereby the communications quality is prevented from being lowered (Japanese Patent Application, First Publication No. 08-316886).

However, in the above-described relays, since it is necessary to change to carrier waves of a new frequency after converting the frequency and securing digital signals by demodulating communication signals, there is a shortcoming in that not only is the structure of the apparatus made complex, resulting in an increase in size of the apparatus, but also the cost is increased.

The invention was developed in view of the above-described situations, and it is therefore an object of the invention to provide a small-sized and inexpensive relay amplifier, capable of ensuring high communications quality, the structure of which is simple.

### DISCLOSURE OF THE INVENTION

The invention provides a relay amplifier that is installed at a branch point of a power line in a power line communications and amplifies communication signals, and comprises a plurality of signal couplers which are provided at the power lines at both sides of the branch point, and which transmit communication signals to the power lines and receive the same therefrom; and an amplifier that amplifies communication signals inputted from the plurality of signal couplers.

In the invention, it is preferable that the amplifier selectively amplifies the frequency band of a voltage waveform that is attenuated by impedance of the branch point and the power line.

Also, in the invention, it is preferable that the plurality of signal couplers are connected to power lines, the phase angles of voltage waveforms of which differ from each other, which are selected from the power lines.

In the invention, the plurality of signal couplers are induction type couplers including a cylindrical ferrite core and a conductor wound around the outer circumferential surface of the ferrite core.

In the invention, it is preferable that the plurality of signal couplers are capacitance types that are directly connected to the power lines, and are provided with a power source portion for generating a drive voltage of the amplifier upon receiving a power supply from the power lines.

In the invention, it is preferable that at least one of the plurality of signal couplers is of an induction type or a capacitance type.

Also, in the invention, it is preferable that a surge noise protection circuit is provided at the input and output terminals of the amplifier or the signal couplers in order to prevent a surge noise of inductive lightning from being inputted.

It is preferable that the relay amplifier according to the invention is provided with means for detecting an oscillation state of the amplifier, means for displaying and notifying the oscillation state of the amplifier, and means for adjusting the gain of the amplifier.

Further, it is preferable that the relay amplifier according to the invention is provided with means for detecting an oscillation state of the amplifier, and means for stopping the oscillation by adjusting the gain of the amplifier.

The invention provides a power line communications system equipped with a relay amplifier having the above-described structure.

The invention provides a method for power line communications, in which a relay amplifier is provided at branch points of power lines in order to amplify communication signals, and the method comprises a step of transmitting and receiving communication signals with respect to the power lines via signal couplers each connected to the power lines at both sides of the branch point, and a step for amplifying the communication signals outputted from the signal couplers by using an amplifier.

The invention provides an induction type signal coupler comprising a cylindrical ferrite core and a conductor wound around the outer circumferential surface of the ferrite core.

With the relay amplifier according to the invention, since the amplitude of the communication signals can be restored to a predetermined voltage level by setting the amplification factor for each of the branch points corresponding to the line characteristics, and influences of oscillation resulting from loop-back and interference onto signals can be lessened, it is possible to improve the communications quality to respective clients.

Also, with the relay amplifier according to the invention, since an amplifier is provided with an appropriate amplification factor set for each of the branch points, it is possible to prevent oscillations only by means of the amplifier. Further, since the relay amplifier can be composed of simple circuits, the equipment can be downsized and can be produced inexpensively.

### BRIEF DESCRIPTION OF THE DRAWINGS

FIG. 1 depicts Embodiment 1 of a relay amplifier according to the invention, and is a block diagram depicting a power line communications system equipped with the relay amplifier;
FIG. 2 is a schematic view describing the characteristics of a bidirectional amplifier in FIG. 1;
FIG. 3 depicts Embodiment 2 of a relay amplifier according to the invention, and is a block diagram depicting a power line communications system equipped with the relay amplifier;
FIG. 4 depicts Embodiment 3 of a relay amplifier according to the invention, and is a block diagram depicting a power line communications system equipped with the relay amplifier; and
FIG. 5 is a schematic view depicting a power line communications system using a prior art relay.

### BEST MODE FOR CARRYING OUT THE INVENTION

Hereinafter, a description is given of preferred embodiments of the invention with reference to the drawings.

### (Embodiment 1)

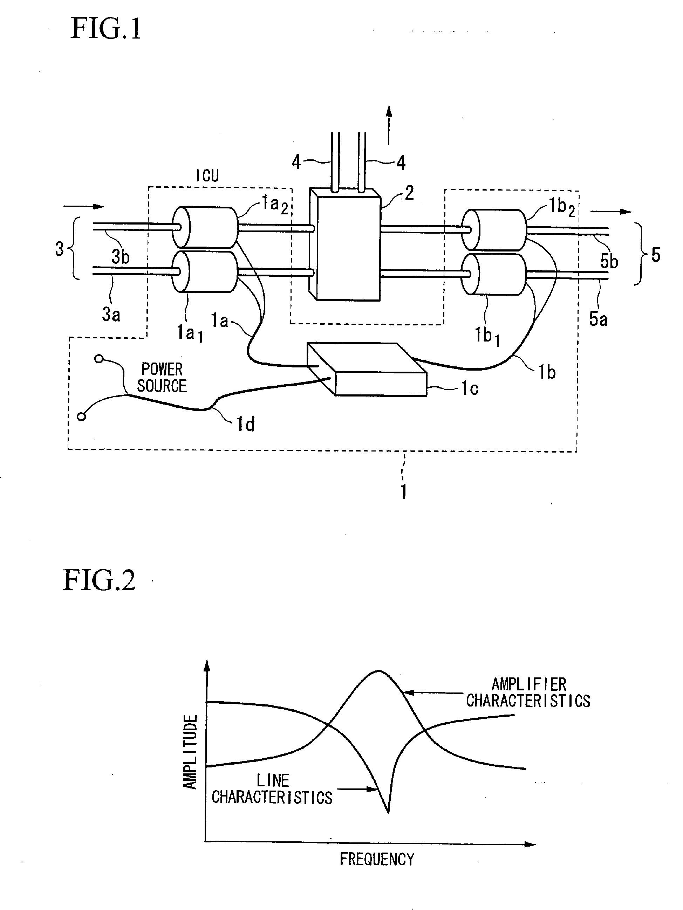

FIG. 1 depicts a power line communications system using a relay amplifier 1.

A power line 3 is a backbone electric line for transmitting electric power, which is transformed to, for example, 200V through 220V in a transformer substation, to the vicinity of respective client subscribers. The power line 3 is branched to a branch power line 4 and a branch power line 5 at a power branch point 2.

The power line 3 composes a part of the power line communications system, and is connected to other information communications lines (public lines, exclusive lines, LAN, network such as the Internet, etc.) via a service server installed in a transformer substation (illustration of the service server and information communications lines is omitted). Also, a personal computer (hereinafter called a "PC") of a client is connected to the branch power line 5 via a signal coupler (illustration of the PC and the signal coupler is omitted).

The service server extracts transmission data (digital data) from the information communications circuit, modulates carrier waves of a predetermined frequency band to communication signals based on the extracted transmission data, and the modulated communication signals are overlapped on the voltage waveforms of power transmission by the power line 3, wherein communication signals are transmitted and received between respective clients and service providers, etc., via the power line 3.

The service server and a PC of a client, which is connected to the branch power line 5, transmit and receive communication signals by using a power line 3a and a branch power line 5a, and a power line 3b and a branch power line 5b. For example, the service server transmits communication signals by overlapping communication signals on one power line 3a and overlapping inverted signals of the communication signals on the other power line 3b. The client PC extracts the communication signals from the branch power line 5a, using a filter, etc., and extracts the inverted signals of the communication signals from the branch power line 5b, using a filter, etc. And, differentials between the extracted communication signals and the extracted inverted signals are amplified, and the transmission data is read as digital data by demodulating the amplification results.

A signal coupler 1a₁ is installed on the power line 3a, and a signal coupler 1a₂ is installed on the power line 3b. On the other hand, a signal coupler 1b₁ is installed on the branch power line 5a, and a signal coupler 1b₂ is installed on the branch power line 5b. The signal couplers 1a₁ and 1a₂ and 1b₁ and 1b₂ carry out transmission and reception of data between the respective power lines and the relay amplifier 1.

The relay amplifier 1 is provided with a bidirectional amplifier 1c. The bidirectional amplifier 1c is connected to the signal coupler 1a₁ and 1a₂ via a signal line 1a, and simultaneously is connected to the signal couplers 1b₁ and 1b₂ via a signal line 1b. Further, the bidirectional amplifier 1c is connected to a peripheral power source via a power line 1d.

The bidirectional amplifier 1c amplifies communication signals (down signals) inputted from the power line 3 via the signal couplers 1a₁ and 1a₂ and the signal line 1a and outputs the same to the branch power line 5 via the signal line 1b and the signal couplers 1b₁ and 1b₂. On the other hand, the bidirectional amplifier 1c amplifies communication signals (up signals) inputted from the branch power line 5 via the signal couplers 1b₁ and 1b₂ and the signal line 1b and outputs the same via the signal line 1a and the signal couplers 1a₁ and 1a₂.

The signal couplers 1a₁ and 1a₂ and the signal couplers 1b₁ and 1b₂ are induction (electromagnetic-induction) type couplers (for example, an air-core coil) which are composed of a cylindrical ferrite core around the surface of which a conductor is wound, which are disposed so that a power line is passed through a hollow portion of the ferrite core, and which connect communication signals to be transmitted with respect to a power line. These couplers have a function of a band-pass filter that can pass a predetermined frequency. That is, the signal couplers 1a₁ and 1a₂ and the signal couplers 1b₁ and 1b₂ are magnetically coupled to respective power lines, and carry out transmission and reception of communication signals via the respective power lines at a predetermined frequency.

An amplifier having the characteristics depicted in FIG. 2 is used as the bidirectional amplifier 1c. FIG. 2 depicts the frequency as the abscissa and the amplitude strength as the ordinate.

The communication signals are influenced by line characteristics including mismatching of impedance (for a plurality of lines whose impedance differs from each other) of the respective power lines and branch points, wherein the signal intensity in a specified frequency band is attenuated at respective branch points. Therefore, in the bidirectional amplifier 1c, the relationship between the frequency and the degree of amplification is set so as to selectively amplify the signals attenuated by being influenced by the line characteristics (that is, so that the degree of amplification of a frequency band in which the signals are included is increased). That is, the bidirectional amplifier 1c amplifies so that the signals of a predetermined frequency band are caused to have a constant amplitude.

Therefore, where, in the power line communications, communication signals obtained by converting transmission data are transmitted with the communication signals overlapped on a plurality of sub-carrier waves included in a predetermined frequency band, since the amplitude of the plurality of sub-carrier waves is made constant, a frequency band which can be used in prior arts since oscillations are brought about, and a frequency band which cannot be used for transmission since a sufficient amplitude is not obtained may be used for transmission of data. That is, since the frequency band that can be used for data transmission is expanded, the amount of data transmission can be increased.

The degree of amplification of the bidirectional amplifier 1c is set to a level at which oscillation resulting from loop-back does not occur. The phase of input to the amplifier and the phase of output from the amplifier are completely delayed and are made into 360°, and a state of positive feedback is brought about. For this reason, the bidirectional amplifier 1c begins oscillating at a frequency that [amount of feedback x amplification factor] exceeds 1.

Accordingly, in order to prevent oscillations resulting from loop-back of the bidirectional amplifier 1c, the amount of feedback is measured and calculated in association with the line characteristics of the frequency band of communication signals. Thereby, in association with the amount of feedback, the degrees of amplification in two directions of the bidirectional amplifier 1c are set so that the [amount of feedback x amplification factor (gain of feedback loop)] does not exceed 1.

Also, the amplified communication signals lessen the communications quality by interference as noise. Therefore, the degrees of amplification may be set so that the gain of the feedback loop satisfies a value that becomes lower than the SN ratio which degrades the communications quality (the ratio of noise component in association with the signal component).

Also, since the line characteristics differ from each other in the respective branch points, the amplification (gain) characteristics of the bidirectional amplifier 1c are adjusted in respective installed branch points.

Since the relay amplifier 1 according to the embodiment restores the amplitude of communication signals to a predetermined voltage level by setting the amplification factors in association with the line characteristics in the respective branch points, and reduces oscillations resulting from loop-back and influences due to interference onto signals, it is possible to improve the communications quality to respective clients.

Further, since the relay amplifier 1 employs induction type couplers (coupling units) for the signal couplers 1a₁ and 1a₂ and the signal couplers 1b₁ and 1b₂, it is not necessary to stop power transmission (to avoid electric failure for connection work) by cutting off a power-feeding line in association with attaching the signal couplers to power lines, and thus the attaching work can be facilitated.

### (Embodiment 2)

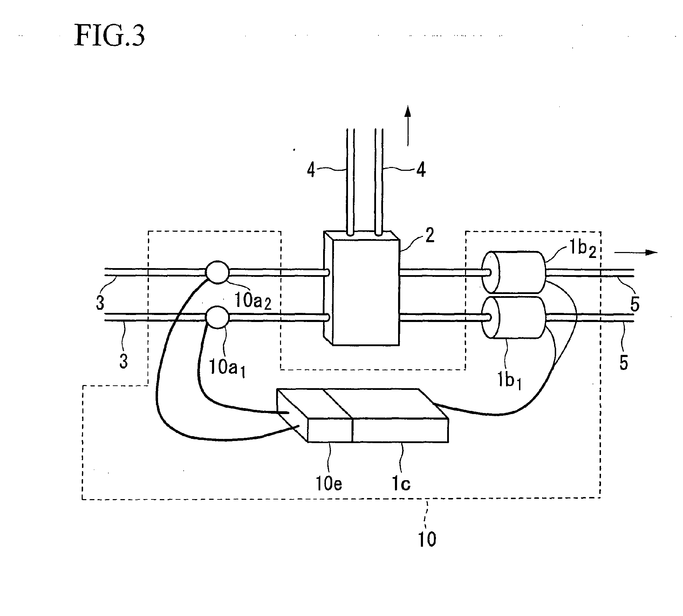

FIG. 3 depicts a power line communications system using a relay amplifier 10. Also, in the embodiment, components that have a function similar to Embodiment 1 described above are given the same reference numerals, and descriptions thereof are omitted.

In the embodiment, a connection portion (connector) 10a₁ is installed on the power line 3a, and a connection portion (connector) 10a₂ is installed on the power line 3b. The connection portions (connectors) 10a, and 10a₂ are directly connected to the respective power lines, and carry out transmission and reception of data and acquisition of power between the respective lines and the relay amplifier 10.

The relay amplifier 10 is provided with a bidirectional amplifier 1c and the signal coupler 10e. The bidirectional amplifier 1c is connected to the connection portions 10a₁ and 10a₂ via the signal line 1a and the signal coupler 10e, and at the same time, is connected to the signal couplers 1b₁ and 1b₂ via the signal line 1b. The bidirectional amplifier 1c amplifies communication signals (down signals) inputted via the connector 10a₁ and 10a₂ signal line 1a and signal coupler 10e from the power lines 3, and outputs the same to the branch power lines 5 via the signal line 1b and the signal couplers 1b₁ and 1b₂. On the other hand, the bidirectional amplifier 1c amplifies communication signals (up signals) inputted via the signal couplers 1b₁ and 1b₂ and the signal line 1b from the branch power lines 5, and outputs the same to the power lines 3 via the signal coupler 10e, the signal line 1a and the connectors 10a₁ and 10a₂.

The signal coupler 10e is a capacitance coupling type (capacitance type) coupler (coupling unit) composed of a filter, etc., including, for example, a direct-current blocking capacitor (coupling capacitor), and functions as a power source. While the signal coupler 10e couples communication signals (that is, overlaps the signals on power waveforms) on the power lines 3 via the connectors 10a, and 10a₂, the signal coupler 1 0e is provided with a band pass filter that extracts the communication signals overlapped on the voltage waveforms of inputted power and a power source portion that generates a predetermined voltage to drive the bidirectional amplifier 1 c by using power inputted from the power lines 3.

In addition, when connecting the connectors 10a₁ and 10a₂ to the power lines 3, it is necessary to stop power transmission by cutting off a feeder circuit to the power lines 3.

Since the relay amplifier 10 according to the embodiment sets the amplification factor in association with the line characteristics for respective branch points as in Embodiment 1 described above, the relay amplifier 10 restores the amplitude of communication signals to a predetermined voltage level and reduces oscillations resulting from the loop-back and influences due to interference onto the signals, wherein it is possible to improve the communications quality to respective clients.

Also, the relay amplifier 10 employs a capacitance type coupler (coupling unit) as the signal coupler 10e, and generates a predetermined voltage necessary to drive the bidirectional amplifier 1c from power supplied via the connectors 10a₁ and 10a₂. Therefore, in particular, since no facility for power supply is required, it is possible to the reduce costs and amount of work required to secure a power source at the connection points.

Further, in FIG. 3, since the signal couplers 1b₁ and 1b₂ installed on the branch power line 5 are replaced by that similar to the signal coupler 10e, a capacitance type coupler may be used for the power line 3 and the branch power line 5.

In addition, in FIG. 3, the signal couplers 1b₁ and 1b₂ installed on the branch power line 5 are replaced by that similar to the signal coupler 10e, and the signal coupler 10e installed on the power line 3 may be replaced by that similar to the signal couplers 1a₁ and 1a₂, which are described in Embodiment 1.

### (Embodiment 3)

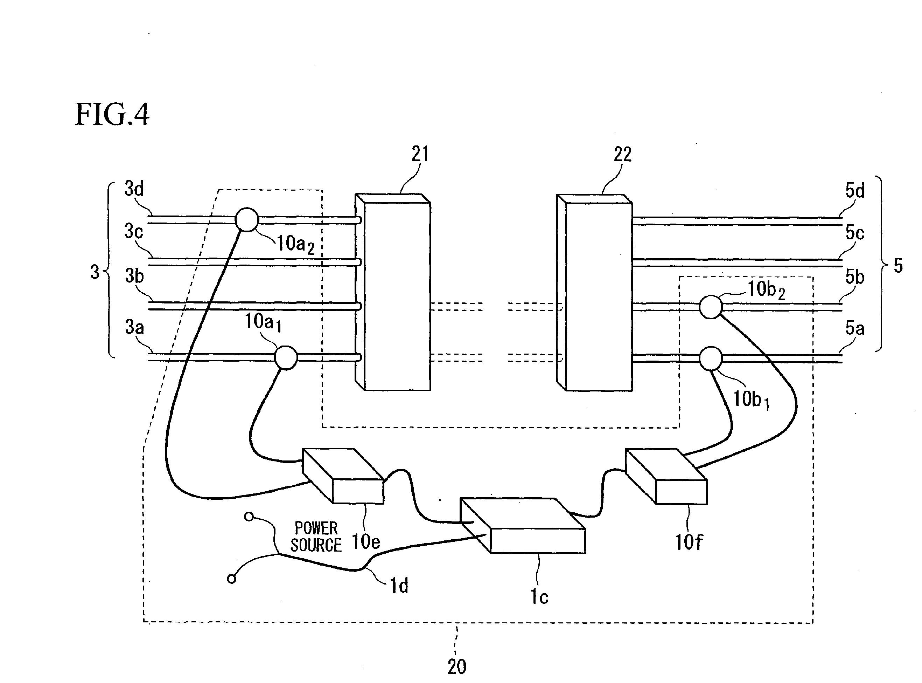

FIG. 4 depicts a power line communications system using a relay amplifier 20. Also, in the present embodiment, components that have functions similar to Embodiments 1 and 2 described above are given the same reference numerals, and descriptions thereof are omitted. The system is constructed in an area where power transformed to approx. 200V in a substation is converted to a plurality of phases of alternate currents (AC), that is, a plurality of phases in which the phase angles of voltage waveforms differ from each other, and is then transmitted.

Power is transmitted through the power lines 3a and 3b, and power lines 3c and 3d with the phase angles of the voltage waveform shifted by a predetermined angle (for example 120 degrees). Similarly, power is transmitted through the branch power lines 5a and 5b, and branch power lines 5c and 5d with the phase angles of the voltage waveform shifted by a predetermined angle (for example 120 degrees).

Power having the same phase angle is transmitted through the power line 3a and the branch power line 5a with branch points 21 and 22 of power placed therebetween. Similarly, power having the same phase angle is transmitted through the power line 3b and the branch power line 5b, the power line 3c and the branch power line 5c, and the power line 3d and the branch power line 5d with the branch points 21 and 22 placed therebetween, respectively.

The connector 10a₁ is installed on the power line 3a of the power lines 3a through 3d, and the connector 10a₂ is installed on the power line 3d thereof. On the other hand, the connector 10b₁ is installed on the power line 5a of the power lines 5a through 5d, and the connector 10b₂ is installed on the power line 5b thereof. The connectors 10a₁ and 10a₂, and the connectors 10b₁ and 10b₂ are connected directly to the respective power lines, and carry out transmission and reception of data and acquisition of power between the respective power lines and the relay amplifier 20.

The relay amplifier 20 is provided with the bidirectional amplifier 1c and signal couplers 10e and 10f. The bidirectional amplifier 1c is connected to the connectors 10a₁ and 10a₂ via the signal lines 1a and the signal coupler 10e, and at the same time, is connected to the connectors 10b₁ and 10b₂ via the signal line 1b and the signal coupler 10e. The bidirectional amplifier 1c amplifies communication signals (down signals) inputted from the power line 3 via the connectors 10a₁ and 10a₂, the signal line 1a and the signal coupler 10e, and outputs the same to the branch power line 5 via the signal coupler 1 0f, the signal line 1b and the connectors 10b₁ and 10b₂. On the other hand, the bidirectional amplifier 1c amplifies communication signals (up signals) inputted from the branch power line 5 via the connectors 10b₁ and 10b₂, the signal line 1b and the signal coupler 10f, and outputs the same to the power line 3 via the signal coupler 10e, the signal line 1a and the connectors 10a₁ and 10a₂.

The power line 3 a and the branch power line 5a are common lines in the voltage waveform of alternate current. One connector 10a₁ of the signal coupler 10e is connected to the power line 3a, and one connector 10b₁ of the signal coupler 10f is connected to the branch power line 5a. And the other connector 10a₂ of the signal coupler 10e is connected to the power line 3d, and the other connector 10b₂ of the signal coupler 10f is connected the branch power line 5b by which power transmission of a phase angle differing from the power line 3d is carried out.

As in the signal coupler 10e already described above, the signal coupler 10f is a capacitance type coupler (coupling unit) composed of a filter, etc., including, for example, a direct-current blocking capacitor, and functions as a power source. The signal coupler 10f is provided with a band pass filter that extracts the communication signals overlapped in the voltage waveforms of inputted power while it couples communication signals (overlaps the communication signals onto power waveforms) to the branch power line 5 via the connectors 10b₁ and 10b₂, and a power source portion for generating a predetermined voltage to drive the bidirectional amplifier 1c using a part of the inputted power. Also, it is not necessary that the power source portion is provided in both of the signal couplers 10e and 10f. It is sufficient that the power source portion is provided in any one thereof.

In addition, when connecting the connectors 10b₁ and 10b₂ to the branch power line 5, it is necessary that the power transmission is stopped by cutting off the feeder circuit to the branch power line 5.

The relay amplifier 20 according to the embodiment restores the amplitude of communication signals to a predetermined voltage level by setting the amplification factor in association with the line characteristics for each of the branch points as in Embodiments 1 and 2 described above, and reduces oscillations resulting from loop-back and influences due to interference onto the signals. Therefore, it is possible to improve the communications quality to respective clients.

Further, the relay amplifier 20 according to Embodiment 3 can carry out transmission and reception of signals without the amplified signals being inputted into the bidirectional amplifier 1 c since the connectors 10a₂ and the connector 10b₂ are, respectively, connected to power lines having different phase angles, that is, power lines which are electrically insulated from each other. Therefore, oscillations resulting from loop-back and interference onto the signals can be completely prevented. In addition, since it not necessary to carry out adjustment of the amplification degree, a simplified amplifier can be adopted, wherein it is possible to reduce the cost of the amplifier and to lower the amount of work when installing the same.

Further, the relay amplifier 20 employs a capacitance type coupler (coupling unit) as the signal coupler 10e, and generates a predetermined voltage necessary to drive the bidirectional amplifier 1 c from power supplied via the connectors 10a₁ and 10a₂. Therefore, in particular, since no facility for power supply is required, it is possible to reduce the costs and amount of work to secure a power source at the connection points.

Also, in FIG. 4, the signal couplers 10f installed in the branch power line 5 may be replaced by that similar to the signal couplers 1b₁ and 1b₂.

In addition, in FIG. 4, the signal coupler 10f installed in the branch power line 5 may be replaced by that similar to the signal couplers 1b₁ and 1b₂, and the signal coupler 10e installed in the power line 3 may be replaced by the signal couplers 1a₁ and 1a₂. Thus, by employing the signal couplers 1a₁ and 1a₂ and the signal couplers 1b₁ and 1b₂, which are inductive type coupling units, it is not necessary to stop power transmission (to stop power for connection work) by cutting off the feeder circuit when attaching the same on the power lines. Therefore, attaching work thereof can be facilitated.

In this connection, regarding the relay amplifiers (1, 10 and 20) described in Embodiments 1, 2 and 3 described above, they may be constructed such that a surge noise protection circuit is provided in the input and output sides of the bidirectional amplifier 1c or the signal couplers (1a₁, 1a₂, 1b₁, 1b₂), and the bidirectional amplifier 1c and the signal couplers are protected by a surge noise of inductive lightning.

Although it is known that inductive lightning occurs due to a large change in the electric field in dielectrics existing between a thundercloud and the ground, similar inductive lightning occurs as well in power lines laid in a building in the power line communications system, whereby there is a problem in that communications equipment (internal circuits such as relay amplifiers) is subjected to hindrance.

Further, in all places where a relay station is installed, it is difficult to guide the above-described inductive lightning to the ground, and there may be a case where the inductive lightning cannot be guided to the ground in some places. Therefore, the place of installation of a relay station is limited, and the degree of freedom of installation places is suppressed, wherein the installation costs will be increased depending on the installation places, and there is a shortcoming in that the maintenance becomes difficult.

Therefore, as in the invention, by providing a surge noise protection circuit at the input and output sides of the bidirectional amplifier 1 c or the signal couplers (1a₁, 1a₂, 1b₁, and 1b₂), it becomes possible to eliminate hindrance on communications equipment, which results from surge noise of inductive lightning, wherein the place of installation of a relay station is not limited, the installation cost is made inexpensive, and it is possible to install the relay amplifiers at places where maintenance can be easily carried out. Accordingly, it is possible to reduce trouble for maintenance.

In addition, the relay amplifiers (1, 10, and 20) described in Embodiments 1, 2 and 3 are provided with an oscillation state detecting function for detecting oscillations when the bidirectional amplifier 1c is subjected to oscillations, and a displaying function for notifying that oscillations have occurred (that is, to be provided with a light-emitting diode, etc.), wherein the relay amplifiers may be provided with a function for detecting oscillations of the bidirectional amplifier 1c and stopping the oscillations thereof by lowering the gain of the bidirectional amplifier 1c based on the results of detection (that is, to reduce the amplification degree to 1 or less so that no oscillation occurs).

Taking an increase in consumption current of the bidirectional amplifier 1c into consideration when the bidirectional amplifier 1c oscillates, the oscillation state detecting function detects oscillations of the bidirectional amplifier 1c by detecting an increase in the consumption current (that is, detecting whether or not the consumption current exceeds a predetermined threshold value). The displaying function causes a light-emitting diode to be lit in compliance with the brightness in association with the amount of consumption current of the bidirectional amplifier 1c. Thereby, it is possible for a worker in charge of installation and maintenance to visually check the degree of oscillations.

When the gain of the bidirectional amplifier 1c is excessively high in comparison with the line characteristics at the branch points of power lines, there may be a case where oscillation of the bidirectional amplifier 1 c occurs. Accordingly, there may be cases where a measurement instrument to measure the power level of communication signals is installed at the branch points of power lines. However, installation of such a measurement instrument at the branch points will result in an increase in management costs.

Therefore, the relay amplifier according to the invention is provided with a function of detecting the oscillation state of the bidirectional amplifier 1c and of notifying a worker of the oscillations by causing a light-emitting diode to be lit where the bidirectional amplifier 1c oscillates, wherein the gain of the bidirectional amplifier 1c is adjusted so as to be lowered to stop the oscillation.

In the invention, since a worker adjusts the gain of the bidirectional amplifier 1c so as to turn off the light-emitting diode while checking the brightness of the light-emitting diode and can stop the oscillation of the bidirectional amplifier 1c, anyone can easily adjust the bidirectional amplifier 1c, wherein a worker not having knowledge about amplifiers, etc., can easily carry out installation of relay amplifiers, and it becomes possible to reduce the installation costs of the relay amplifiers.

In addition, the relay amplifiers 1, 10 and 20 may be provided with an oscillation state detecting function for detecting an oscillation state of the bidirectional amplifier 1c and a gain adjusting function for lowering the gain of the bidirectional amplifier 1c to the level at which the oscillation stops by automatically adjusting the gain of the bidirectional amplifier 1c where it is detected based on the detection result that the bidirectional amplifier 1 c oscillates (to reduce the amplification degree to 1 or less so that the amplifier 1c does not oscillate, as already described in Embodiment 1).

Since, in the power line communications system, the impedance of the line changes based on states of load (due to the number of connections of household electric appliances) from time to time, the attenuation ratio at the branch points changes along with time due to a fluctuation in load at a branching destination. If the gain of the bidirectional amplifier 1c is fixed (the amplification degree is not adjusted) at a level including a fluctuation margin where the attenuation ratio at a branch point changes, an optimal gain responsive to the amount of attenuation is not obtained, or the load changes after setting, wherein the bidirectional amplifier 1c is subjected to oscillations.

Therefore, the relay amplifier according to the invention may be provided with an oscillation state detecting function for detecting the oscillation state of the bidirectional amplifier 1 c and a gain adjusting function by which the gain of the bidirectional amplifier 1c can be automatically adjusted so that the oscillation can stop. According thereto, it is not necessary to carry out minute gain adjustment of the bidirectional amplifier 1 c when installing a relay amplifier, wherein the installation work can be simplified. Furthermore, since the gain can be automatically adjusted in compliance with a fluctuation in the impedance of a line, no trouble is required for maintenance to secure stabilized communications quality, and the running costs can be reduced.

Next, a description is given of an operation example of the above-described gain adjustment function.

As the oscillation state detecting function samples the amount of consumption current of the bidirectional amplifier 1 c and detects that the amount thereof reaches a predetermined value, it outputs a detection signal to the gain adjustment function. If the detection signal is inputted into the gain adjustment function, the gain adjustment function lowers the gain of the bidirectional amplifier 1c and adjusts it to the minimum value. Next, the gain adjustment function stepwise increases the gain of the bidirectional amplifier 1 c by a predetermined value width from the minimum value and detects the oscillation of the bidirectional amplifier 1c. Initially, if oscillations are detected although the bidirectional amplifier 1c does not oscillate, the gain adjustment function newly sets the gain of the bidirectional amplifier 1c one step before, that is, the maximum gain, at which no oscillation occurs, as the optimal gain.

Also, the gain adjustment function carries out adjustment of the gain of the bidirectional amplifier 1c periodically (in an optionally fixed cycle). That is, since the gain adjustment function carries out re-adjustment of the gain of the bidirectional amplifier 1c in a fixed cycle, there is no case where the above-described gain once lowered is kept at a low value, and the gain is adjusted to a size most matched to the line impedance at all times.

As described above, a description was given of preferred embodiments. However, the invention is not limited to the above embodiments. The invention may be subjected to addition, omission, substitution and other modifications within the scope not departing from the spirit of the invention. Also, the invention is not limited by the above description, but is limited only by the scope of the appended claims.

### INDUSTRIAL APPLICABILITY

The invention relates to a relay amplifier, installed at a branch point of a power line in a power line communication, for amplifying communication signals, the same relay amplifier comprising: a plurality of signal couplers which are provided at the power lines at both sides of the branch point, and transmit communication signals to the power lines and receive the same therefrom; and an amplifier that amplifies communication signals inputted from the plurality of signal couplers.

The invention relates to a power line communications system including a relay amplifier having the above-described structure.

The invention relates to a method for power line communications, in which a relay amplifier is provided at branch points of power lines in order to amplify communication signals, the same method comprising the steps of transmitting and receiving communication signals with respect to the power lines via signal couplers each connected to the power lines at both sides of the branch point; and amplifying the communication signals outputted from the signal couplers by using an amplifier.

The invention relates to an induction type signal coupler comprising a cylindrical ferrite core and a conductor wound around the outer circumferential surface of the ferrite core.

According to the relay amplifier of the invention, since the amplitude of the communication signals can be restored to a predetermined voltage level by setting the amplification factor for each of the branch points in association with the line characteristics, and influences of oscillation resulting from loop-back and interference onto signals can be lessened, it is possible to improve the communications quality to respective clients.

In addition, according to the relay amplifier of the invention, since an amplifier is provided with an appropriate amplification factor set for each of the branch points, it is possible to prevent oscillations only by means of the amplifier. Further, since the relay amplifier can be composed of simple circuits, the equipment can be downsized and can be produced at an inexpensive cost.

## Claims

1. A relay amplifier, installed at a branch point of a power line in a power line communication, for amplifying communication signals, said relay amplifier comprising:
a plurality of signal couplers which are provided at the power lines at both sides of the branch point, and which transmit communication signals to the power lines and receive the same therefrom; and
an amplifier that amplifies communication signals inputted from the plurality of signal couplers.

2. The relay amplifier according to claim 1, wherein the relay amplifier selectively amplifies a frequency band of a voltage waveform attenuating due to impedance of the branch points and the power lines.

3. The relay amplifier according to claim 1, wherein the plurality of signal couplers are connected to power lines having a different phase angle of the voltage waveform, among the power lines.

4. The relay amplifier according to claim 1, wherein the plurality of signal couplers are inductive type couplers each comprising a cylindrical ferrite core and a conductor wound around the outer circumferential surface of the ferrite core.

5. The relay amplifier according to claim 1, wherein the plurality of signal couplers are capacitance type couplers directly connected to the power lines, and are provided with a power source portion for generating a drive voltage of the amplifier upon receiving power from the power lines.

6. The relay amplifier according to claim 1, wherein at least one of the plurality of signal couplers is an inductive type or a capacitance type.

7. The relay amplifier according to claim 1, wherein the input and output terminals of the amplifier or the signal couplers are provided with a surge noise protection circuit to stop input of surge noise resulting from inductive lightning.

8. The relay amplifier according to claim 1, further comprising: means for detecting an oscillation state of the amplifier; means for displaying the oscillation state of the amplifier; and means for adjusting gain of the amplifier.

9. The relay amplifier according to claim 1, further comprising: means for detecting an oscillation state of the amplifier; and means for stopping the oscillations by adjusting gain of the amplifier.

10. A power line communications system including any one of the amplifiers according to claims 1 through 9.

11. A power line communications method, in which a relay amplifier is provided at branch points of power lines in order to amplify communication signals, said method comprising the steps of:
transmitting and receiving communication signals with respect to the power lines via signal couplers each connected to the power lines at both sides of the branch point; and
amplifying the communication signals outputted from the signal couplers by using an amplifier.

12. An induction type signal coupler comprising:
a cylindrical ferrite core; and
a conductor wound around the outer circumferential surface of the ferrite core.
